# EUROPÄISCHE PATENTSCHRIFT

(11) **EP 0 958 490 B1**
(45) Veröffentlichungstag und Bekanntmachung des Hinweises auf die Patenterteilung: **07.09.2005**
(21) Anmeldenummer: 97949906.8
(22) Anmeldetag: 11.11.1997
(51) Int. Cl.: G01M 11/00

(54) **OPTISCHES IMPULSREFLEKTOMETER**
OPTICAL TIME-DOMAIN REFLECTOMETER
REFLECTOMETRE OPTIQUE DANS LE DOMAINE TEMPS

(30) Priorität: 29.11.1996 DE 19649594
(43) Veröffentlichungstag der Anmeldung: 24.11.1999
(73) Patentinhaber: Deutsche Telekom AG, 53113 Bonn (DE)
(72) Erfinder: WALTER, Herbert, D-64673 Zwingenberg (DE)
(86) Internationale Anmeldenummer: PCT/DE1997/002629
(87) Internationale Veröffentlichungsnummer: WO 1998/023937

(56) Entgegenhaltungen:
- EP-A- 0 468 412
- EP-A- 0 502 422
- WO-A-91/12509
- DE-A- 4 437 821
- US-A- 4 737 027
- US-A- 5 319 266
- US-A- 5 388 172
- PATENT ABSTRACTS OF JAPAN vol. 11, no. 112 (P-565), 9.April 1987 & JP 61 260228 A (NEC CORP), 18.November 1986,
- H. KAWASHIMA U.A.: "A LOW CROSSTALK AND POLARIZATION INDEPENDENT OPTICAL WAVEGUIDE SWITCH FOR OTDR" NEC RESEARCH AND DEVELOPMENT., Nr. 99, Oktober 1990, TOKYO JP, Seiten 75-83, XP000178479
- S.K. DAS U.A.: "OPTICAL TIME-DOMAIN AND CW TECHNIQUES MEASURE LIGHTWAVE REFLECTANCE" LASER FOCUS. INCL. V NO. 2450 ELECTRO-OPTICS, SINCE 1983., Bd. 24, Nr. 12, Dezember 1988, TULSA US, Seiten 129-134, XP000004696

## Beschreibung

Die Erfindung betrifft ein optisches Impulsreflektometer gemäß dem Oberbegriff des Anspruchs 1.

Der kontinuierliche Auf- und Ausbau von Glasfasernetzen erfordert den Einsatz geeigneter optischer Meßgeräte während ihrer Installation, zu Wartungszwecken und zu ihrer Überwachung. Ein besonders wichtiges Meßgerät ist hierbei das optische Impulsreflektometer, auch optisches Zeitbereichsreflektometer (engl.: Optical Time Domain Reflectometer - OTDR) genannt. Ein solches Meßgerät dient dazu, Reflexionen in faseroptischen Übertragungssystemen zu messen und auszuwerten. Reflexionen treten in optischen Komponenten, wie z. B. in einer lichtleitenden Faser, im wesentlichen aufgrund von Sprungstellen des Brechungsindexes, beispielsweise am Faserende, und infolge einer Rayleigh-Streuung, deren Ursache in Inhomogenitäten der Faser liegt, auf. Reflektierende optische Komponenten sind z. B. auch Steckverbindungen, Verzweigungen und Spleiße. Bei einem bekannten optischen Impulsreflektometer werden die von einer Laserdiode ausgesandten Impulse über einen statischen oder passiven Leistungsteiler der zu messenden Faser zugeführt. Der statische Leistungsteiler, auch Strahlteiler genannt, kann als halbdurchlässiger Spiegel, als faseroptischer 2x2-Koppler (auch Richtkoppler oder direktionaler Koppler genannt) oder als 2:1-Koppler d. h. als umgekehrt betriebener Y-Verzweiger, ausgebildet sein. Der passive Leistungsteiler hat die Funktion, die Ausbreitungsrichtung des Lichtimpulses zu ändern, d. h. die Lichtimpulse räumlich zu lenken. Letzteres ist notwendig, um die von der Faser aufgrund von Rayleigh- und/oder Fresnel-Streuung reflektierten optischen Signalanteile auf einen Photodetektor zu leiten. Dem passiven Leistungsteiler haftet jedoch der Nachteil an, daß etwa nur die Hälfte des reflektierten Signalanteils zum Photodetektor zurückgeführt wird. Die andere Hälfte des reflekierten Signalanteils wird in unerwünschter weise in die Richtung der Laserdiode gelenkt, so daß dieser zusätzlich ein optischer Isolator zum Schutz gegen die unerwünscheten Reflexionen vorgeschaltet sein muß. Darüber hinaus wird der reflektierte Lichtanteil durch unvermeidliche Unvollkommenheiten der Faserverbindungen zusätzlich gedämpft. Werden anstelle eines umgekehrt betriebenen Y-Verzweigers passive 2*2-Koppler oder halbdurchlässige Spiegel verwendet, wird die von der Laserdiode emittierte Lichtleistung sogar nur etwa zu einem Viertel ausgenutzt. Mit anderen Worten wird das von der Laserdiode ausgesandte Signal um den Faktor 4 gedämpft, bevor es auf den Photodetektor fällt.

Die DE-A-4 437 821 offenbart eine Ausblendvorrichtung für ein optisches Zeitbereichs-Reflektometer, auch als OTDR bekannt, das einen Hochgeschwindigkeitsschalter und eine gepumpte Lichtquelle zur Erzeugung optischer Impulse verwendet. Die wesentliche Funktion des Hochgeschwindigkeitsschalters besteht im gezielten Ausblenden eines Bereichs des von der zu vermessenden Faser reflektierten Lichts, das auch als Fresnel-reflektiertes Licht bezeichnet wird. Um dies zu erreichen, wird der optische Hochgeschwindigkeitssschalter synchron mit dem von der Lichtquelle erzeugten optischen Impuls betrieben.

Aus der US-A-5 388172 ist eine optische Schalteinrichtung für ein OTDR bekannt, bei dem ein gepulster Laser und ein optischer Empfänger mit einer zu messenden Faser verbunden sind. Die optische Schalteinrichtung dient dazu, Fresnelreflexionen von der Faser vom optischen Empfänger fernzuhalten.

Die EP-A-0 502 422 offenbart ein optisches Zeitbereichs-Reflektometer, bei dem eine Raman-Laservorrichtung und ein optischer Detektor über einen optischen Schalter mit der zu messenden Faser verbunden sind. Um die Verlusteigenschaften der optischen Faser bei einer beliebigen Wellenlänge innerhalb eines breiten Spektrums erfassen zu können, wird ein Raman-Streulichtimpuls verwendet. Die Raman-Laservorrichtung weist dazu einen Festkörperlaser auf, der mittels einer Laserdiode zur Erzeugung eines Lichtimpulses gepumpt wird.

Aus der WO-A-91 12509 ist ein OTDR bekannt, das zur Erzeugung von Lichtimpulsen einen gepulsten Laser verwendet. Der gepulste Laser und ein optischer Empfänger sind über einen passiven optischen Koppler mit einer zu messenden Faser verbunden.

In dem Aufsatz "A Low Crosstalk and Polarization Independent Optical Waveguide Switch for OTDR", NEC Research and Development., Nr. 99, October 1990, Tokyo JP, S. 75-83, XP000178479 beschreibt H.Kawashima et. al. einen optischen Wellenleiterschalter für ein OTDR bei einer Wellenlänge von 1,3 µm mit einem Ti:LiNbO₃-Wellenleiter. Als Lichtquelle wird wiederum eine Laserdiode verwendet, die Lichtimpulse erzeugt.

Der Erfindung liegt daher die Aufgabe zugrunde, das eingangs beschriebene optische Impulsreflektometer derart weiterzuentwickeln, daß der Schaltungsaufwand und damit die Kosten verringert werden können, indem eine Synchronisation zwischen der Lichtquelle und der Steuereinrichtung zum Umschalten der optischen Weiche nicht mehr erforderlich ist.

Dieses technische Problem löst die Erfindung mit den Merkmalen des Anspruchs 1.

Das optische Impulsreflektometer umfasst wenigstens eine an sich bekannte, schaltbare optische Weiche zum gezielten Verbinden einer Lichtquelle, insbesondere einer Laserdiode mit einem zugeordneten Meßobjekt und zum gezielten Verbinden des Meßobjekts mit einem zugeordneten Photodetektor vorgesehen. Das Umschalten der optischen Weiche erfolgt beispielsweise über eine Steuereinrichtung, die zu vorbestimmten Zeitpunkten die optische Weiche umschaltet. Auf diese Weise wird gewährleistet, daß die optische Sendeleistung der Lichtquelle nahezu ohne Leistungsverlust in das zu messende Objekt, insbesondere einen Lichtwellenleiter, eingekoppelt und das in dem Meßobjekt reflektierte Licht anschließend nahezu ungedämpft dem Photodetektor zugeführt wird. Damit ist es unter anderem möglich, ohne die optische Sendeleistung der Lichtquelle tatsächlich erhöhen zu müssen, Fasern über größere Längen zu überprüfen, als dies bei statischen Leistungsteilern bisher der Fall war. Ferner können für eine Meßstrecke vorgegebener Länge kürzere Lichtimpulse verwendet werden, wodurch die räumliche Auflösung der Messung gesteigert wird. Da mit einer schaltbaren optischen Weiche beispielsweise gegenüber passiven 2*2-Kopplern oder halbduchlässigen Spiegeln etwa eine vervierfachte Leistungsausnutzung erzielt werden kann, läßt sich die Impulsdauer für den Nachweis der Rayleigh-Streuung auf ein Viertel reduzieren. (Denn die Stärke der Rayleigh-Streuung hängt von der Energie (Lichtleistung x Impulsdauer) des Impulses ab.). Für OTDR-Messungen bedeutet das eine genauere Lokalisierbarkeit von signifikanten Punkten auf der Faser. Damit können beispielsweise Reparaturstellen an einem Faserkabel entsprechend präzise geortet werden. Aufgrund des größeren Signalpegels erzeugen auch Fresnel-Reflexionen im Photodetektor entsprechend stärkere Echosignale, die dadurch auch mit höherer Empfindlichkeit nachweisbar sind. Dank der schaltbaren optischen Weiche ist ein optischer Isolator zum Schutz der Lichtquelle vor Reflexionen im Gegensatz zu einem herkömmlichen optischen Impulsreflektometer praktisch entbehrlich. Denn der reflektierte Signalanteil wird nahezu vollständig zum Photodetektor gelenkt.

Als schaltbare optische Weiche kann beispielsweise ein 2x2-Richtkoppler oder ein akusto-optischer Modulator, die beide an sich bekannt sind, verwendet werden. Ein Beispiel für einen schaltbaren optischen 2*2-Richtkoppler ist der thermo-optisch gesteuerte Koppler, der von Norbert Keil in dem Aufsatz "Optische Schalter aus Kunststoff-Schlüsselkomponenten in den Telekom-Netzen der Zukunft", ntz, Heft 12/1995, Seiten 36-41 beschrieben ist. Als Lichtquelle verwendet das optische Impulsreflektometer eine im Gleichlichtmodus betriebene Lichtquelle, wobei die schaltbare optische Weiche auch zur Erzeugung von Lichtimpulsen dient. Die Pulsfrequenz und -dauer der Lichtimpulse wird hierbei von einer Steuereinrichtung durch entsprechende Ansteuerung der optischen Weiche festgelegt. Eine Lichtquelle im Gleichlichtmodus zu betreiben, bringt gegenüber einer gepulsten Lichtquelle mehrere Vorteile. Erstens entfällt die Synchronisation zwischen der Lichtquelle und der Steuereinrichtung zum Umschalten der optischen Weiche. Ferner können die von einem elektrischen Pulsgenerator erzeugten Spannungsspitzen die Lichtquelle nicht mehr beeinträchtigen. Desweiteren können die Zeitanforderungen hinsichtlich einer schnellen Modulation zur Erzeugung ausreichend kurzer Pulse an die Lichtquelle geringer sein.

Um sicherzustellen, daß alle von dem Meßobjekt verursachten Reflexionen auf den Photodetektor gelangen und damit vom optischen Impulsreflektometer ausgewertet werden können, muß der optische Meßimpuls die schaltbare optische Weiche vollständig durchlaufen haben, bevor sie umgeschaltet werden kann. Dies wird durch eine Vorlauffaser vorbestimmter Länge erreicht, die zwischen der optischen Weiche und dem Meßobjekt geschaltet ist. Die Länge der Vorlauffaser muß 1 ≥ cT betragen, wobei c die Lichtgeschwindigkeit in der Vorlauffaser und T die längste Impulsdauer eines vom optischen Impulsreflektometer aussendbaren Impulses ist. Die Vorlaufsfaser wirkt somit als Verzögerungsleitung für die reflektierten Lichtimpulse.

Um Lichtreflexionen zur Lichtquelle oder Abstrahlungen an die Umgebung, die durch den freien Anschluß der optischen Weiche verursacht werden, zu verhindern, ist der freie Anschluß der optischen Weiche mit einem Absorber und einer optischen Abschirmung abgeschlossen. Bei einem 2x2-Koppler kann der Absorber aus mehreren sehr engen Wicklungen (mit einem Durchmesser von wenigen mm) des nicht abgeschlossenen Faserabschnitts gebildet sein. Als Abschirmung können.geeignete Kunststoffhülsen verwendet werden.

In bekannter Weise ist zwischen dem Photodetektor und einer Anzeigeeinrichtung eine Datenaufbereitungseinrichtung, umfassend einen an sich bekannten Boxcar-Durchschnittsbilder sowie eine Logarithmus-Umsetzeinrichtung geschaltet.

Die Erfindung wird nachfolgend anhand eines Ausführungsbeispiels in Verbindung mit den beiliegenden Zeichnungen näher erläutert. Es zeigen:
- Fig. 1: ein stark vereinfachtes Blockschaltbild eines optischen Impulsreflektometers,
- Fig. 2: einen schaltbaren optischen 2*2-Richtkoppler im Geradeaus-Schaltzustand zum Einsatz in dem optischen Impulsreflektometer nach Fig. 1 und
- Fig.3: den in Fig. 2 dargestellten schaltbaren optischen 2*2-Richtkoppler im gekreuzten Schaltzustand.

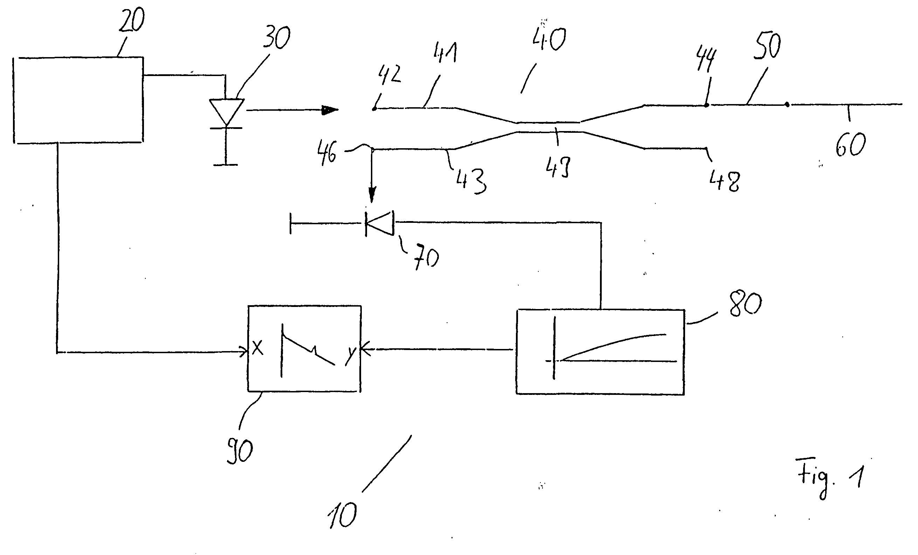

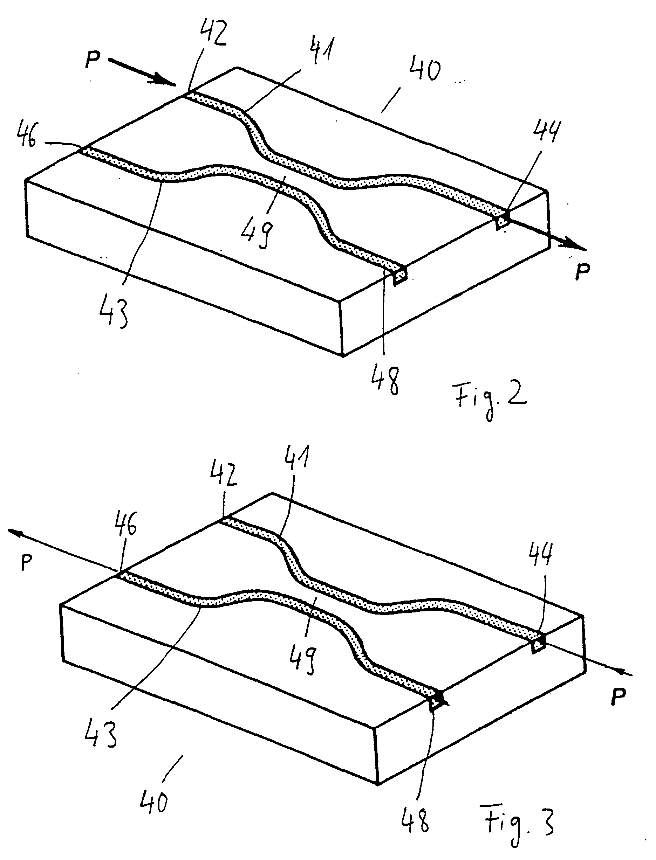

In Fig. 1 ist ein optischer Impulsreflektometer, auch optischer Zeitbereichsreflektometer (OTDR) genannt, dargestellt. Der allgemein mit 10 bezeichnete Impulsreflektometer weist einen an sich bekannten, bezüglich der Impulsdauer und Wellenlänge durchstimmbaren Impulsgenerator 20 auf, der beispielsweise eine Laserdiode 30 ansteuert. Der Laserdiode 30 ist eine schaltbare optische Weiche 40 nachgeschaltet, die unter Ansprechen auf von einer nicht dargestellten Steuereinrichtung erzeugten Schaltsignale umgeschaltet wird. In dem hier beschriebenen Beispiel handelt es sich bei der Weiche 40 um einen mittels einer elektrischen Spannung schaltbaren 2x2-Richtkoppler, wie er in Fig. 2 und 3 dargestellt ist. Der beispielsweise in integriert-optischer Bauweise erhältliche 2*2-Richtkoppler 40 weist zwei im vorbestimmten Abstand zueinander angeordnete lichtleitende Stränge 41 und 43 auf. In einem mittleren Bereich 49 kommen sich die beiden Stränge 41 und 43 so nahe, daß der 2*2-Richtkoppler gezielt geschaltet werden kann. In Abhängigkeit der physikalischen Steuergröße befindet sich der 2*2-Richtkoppler entweder im Geradeaus-Schaltzustand (s. Fig. 2) oder im gekreuzten Schaltzustand (s. Fig. 3). Der Strang 41 besitzt auf der zur Laserdiode 30 weisenden Seite einen als Eingang benutzten Port 42 und auf der gegenüberliegenden Seite einen sowohl als Ausgang als auch als Eingang dienenden.Port 44. Der Strang 43 weist auf der zur Laserdiode 30 weisenden Seite einen als Ausgang fungierenden Port 46 und auf der gegenüberliegenden Seite einen freien Port 48 auf. Um zu verhindern, daß Lichtpulse zur Laserdiode 30 reflektiert oder an die Umgebung abgestrahlt werden, kann der Port 48 mit einer nicht dargestellten Abschirmung und einem Absorber abgeschlossen sein. Der Absorber kann aus mehreren sehr engen Wicklungen des Faserabschnitts des Strangs 43, an dem sich der Port 48 befindet, gebildet sein. Die von der Laserdiode 30 erzeugten optischen Meßimpulse werden in den Eingangsport 42 des Strangs 41 eingekoppelt. Der Port 44 des Strangs 41 ist mit einer Vorlauffaser 50 verbunden. An die Vorlauffaser 50 ist ein Meßobjekt, insbesondere ein Lichtwellenleiter 60, angekoppelt, der nachfolgend als Meßfaser bezeichnet wird. An den Ausgangsport 46 des Strangs 43 des 2x2-Richtkopplers 40 ist ein Photodetektor 70 angekoppelt. Bei dem Photodetektor 70 handelt es sich beispielsweise um eine Photodiode (z. B. Avalange Photo Diode - APD). Die Photodiode 70 wandelt den über den Ausgangsport 46 ankommenden optischen Echoimpuls in ein elektrisches Signal um. Die Photodiode 70 ist ausgangsseitig mit einer Datenauswerteeinrichtung 80 verbunden, die einen an sich bekannten Boxcar-Durchschnittsbilder und eine Logarithmus-Umsetzeinrichtung enthält. Die Datenauswerteeinrichtung 80 dient dazu, mehrere empfangene Echoimpulse zu einem verstärkten und leicht darstellbaren Signal aufzubereiten. Der Ausgang der Datenauswerteeinrichtung 80 ist mit dem ersten Eingang eines Oszilloskops 90 verbunden, auf dem die in der Meßfaser 60 hervorgerufenen Echoimpulse dargestellt werden. An dem zweiten Eingang des Oszilloskops 90 ist der Impulsgenerator 20 angeschlossen, der das Oszilloskop 90 mit der Laserdiode 30 synchronisiert.

Nachfolgend wird kurz die Funktionsweise des optischen Impulsreflektometers 10 erläutert.

Gemäß Fig. 1 werden die von der Laserdiode 30 emittierten Lichtimpulse über den Eingangsport 42 des 2x2-Richtkopplers zum Ausgangsport 44 geführt. Der 2x2-Richtkoppler 40 muß für die Dauer jedes Meßimpulses so geschaltet sein, daß das gesamte Lichtsignal den 2x2-Richtkoppler 40 am Ausgangsport 44 verläßt und im wesentlichen verlustfrei in die Meßfaser 60 eingekoppelt wird. Dazu wird der 2x2-Richtkopplers 40 in den "Geradeaus"-Zustand geschaltet, wie in Fig. 2 dargestellt. Unmittelbar nachdem der Lichtimpuls den Strang 41 vollständig durchlaufen hat, wird der 2*2-Richtkoppler 40 in den gekreuzten Zustand geschaltet, wie dies in Fig. 3 gezeigt ist. In diesem Schaltzustand wird das von der Meßfaser 60 hervorgerufene und in der Vorlauffaser 50 verzögerte Reflexionssignal über den nunmehr als Eingang fungierenden Port 44 des Strangs 41 auf den anderen Strang 43 übergekoppelt. Das Reflexionssignal verläßt den 2x2-Richtkoppler 40 am Port 46 und wird dem Photodetektor 70 zugeleitet werden. Um sicherzustellen, daß alle von der Meßfaser 60 reflektierten Meßimpulse auf die Photodiode 70 gelangen und vom optischen Impulsreflektometer 10 ausgewertet werden können, muß der Meßimpuls den 2x2-Richtkoppler 40 vollständig durchlaufen haben, bevor dieser aus dem Geradeaus-Schaltzustand in den gekreuzten Schaltzustand umgeschaltet werden kann. Zu diesem Zweck ist die Vorlauffaser 50 zwischen dem optisch schaltbaren 2x2-Koppler 40 und der Meßfaser 60 eingefügt. Die Vorlauffaser 50 verzögert den Echoimpuls solange, bis die Umschaltung des 2x2-Richtkopplers 40 erfolgt ist. Die Länge der Vorlauffaser 50 sollte daher 1 ≥ cT sein, wobei c die Lichtgeschwindigkeit in der Vorlauffaser 50 und T die längste Impulsdauer eines von der Laserdiode 30 aussendbaren Impulses sind. Üblicherweise beträgt die Dauer eines von der Laserdiode 30 ausgesendeten Lichtimpulses 10 ns bis 10 µs. Das Puls-Pausen-Verhältnis beträgt beispielsweise etwa 1 : 1000. Jeder Echoimpuls erreicht auf diese Weise unverfälscht den Photodektektor 70 und kann zur Messung des Dämpfungs- und Reflexionsprofils der Meßfaser 60 verwertet und auf dem Oszilloskop 90 dargestellt werden. Darüber hinaus kann durch den Einsatz der Vorlauffaser 50 zuverlässig verhindert werden, daß keine in der Meßfaser 60 reflektierten Lichtanteile zur Laserdiode 30 zurückgeführt werden.

Erfindungsgemäß wird die gepulste Laserdiode 30 durch eine Laserdiode ersetzt, die im Gleichlichtmodus betrieben wird. Hierbei erfolgt die Erzeugung von Lichtpulsen in der optischen Weiche. Im Falle des beschriebenen 2x2 Kopplers 40 wird hierzu für die Dauer eines Meßimpulses das Gleichlicht der Laserdiode 30 im Geradeaus-Schaltzustand auf die Meßfaser 60 gelenkt. Nach Ablauf der gewünschten Impulsdauer, die beispielsweise in der Steuereinrichtung abgelegt ist, wird der 2x2 Koppler 40 in den gekreuzten Zustand geschaltet. Das weiterhin von der Laserdiode 30 ausgesandte Gleichlicht wird auf den Port 48 gelenkt und in dem angeschalteten Absorber im wesentlichen vollständig gedämpft. Gleichzeitig wird das von der Meßfaser 60 aufgrund von Rayleigh-Streuung und Fresnel-Reflexionen zurückgekoppelte Licht zum Photodetektor 70 geführt und anschließend, wie bereits beschrieben verarbeitet und dargestellt.

Die verbesserte Leistungsausnutzung des erfinderischen optischen Impulsreflektrometers 10 kommt dadurch zustande, daß sowohl beim Hin- als auch beim Rücklauf eines Impuls durch geeignete Wahl des Schaltzeitpunktes der optischen Weiche 40 keine strukturellen, d. h. verfahrensbedingte Leistungsverluste mehr auftreten, wie dies bei den statischen Leistungsteilern der Fall ist. Die gesamte, an einem Port des 2x2 Kopplers 40 eintreffende optische Leistung wird also im wesentlichen ungedämpft auf nur jeweils einen Port der gegenüberliegenden Seite durchgeschaltet. Dies gilt beim Aussenden des Meßimpulses wir auch beim Rücklauf der reflektierten Anteile.

Die Steuer- oder Einstellgröße derzeit gebräuchlicher und technisch gut beherrschter Ausführungen von schaltbaren 2x2-Richtkopplern ist sehr häufig eine elektrische Spannung. Das damit verbundene elektrische Feld erlaubt die Nutzung des Pockels-Effektes (linearer elektro-optischer Effekt). Schaltbare optische 2x2-Richtkoppler können in integriert-optischer Bauweise in unterschiedlichen Ausführungen (Wellenleiterstruktur-Materialkomposition) realisiert werden. Darüber hinaus besteht die Möglichkeit einer monolithischen Integration mit der Laserdiode 30 des optischen Impulsreflektometers 10. Eine alternative Ausführungsform einer schaltbaren optischen Weiche für Freistrahlführung des Lichts kann in einer Platte mit beidseitiger Beschichtung bestehen, deren Reflektivität beispielsweise elektrisch zwischen nahezu voller Transparenz während der Aussendung des Meßimpulses und nahezu vollständiger Reflexion während des Empfangs der Reflexionen von der Meßfaser 60 einstellbar ist.

## Patentansprüche

1. Optisches Impulsreflektometer umfassend
- wenigstens eine Lichtquelle (30), insbesondere eine Laserdiode,
- wenigsten eine Anschlußeinrichtung zum Anschalten wenigstens eines Meßobjekts (60) (Faser),
- wenigstens einen Photodetektor (70),
- eine Anzeigeeinrichtung (90),
- wenigstens eine schaltbare optische Weiche (40) zum gezielten Verbinden der Lichtquelle (30) mit dem zugeordneten Meßobjekt (60) und des Meßobjekts (60) mit dem zugeordneten Photodetektor (70),
**dadurch gekennzeichnet, daß**
die Lichtquelle eine im Gleichlichtmodus betriebene Lichtquelle ist, und daß
eine Steuereinrichtung zur Ansteuerung der schaltbaren optischen Weiche (40) zur Erzeugung von Lichtimpulsen mit einer vorbestimmten Frequenz und Dauer vorgesehen ist.

2. Optisches Impulsreflektometer nach Anspruch 1,
**dadurch gekennzeichnet, daß** die optische Weiche (40) ein 2*2-Richtkoppler oder ein akusto-optischer Modulator ist.

3. Optisches Impulsreflektometer nach Anspruch 2, **dadurch gekennzeichnet, daß** der freie Anschluß (48) der optischen Weiche (40) mit einer Lichtabschirmungs- und Absorptionseinrichtung abgeschlossen ist.

4. Optisches Impulsreflektometer nach einem der Ansprüche 1 bis 3, **dadurch gekennzeichnet, daß** jedem Meßobjekt (60) eine Vorlauffaser (50) vorbestimmter Länge vorgeschaltet ist.

5. Optisches Impulsreflektometer nach einem der Ansprüche 1 bis 4, **dadurch gekennzeichnet, daß** zwischen dem Photodetektor (70) und der Anzeigeeinrichtung (90) ein Boxcar-Durchschnittsbilder und eine Logarithmus-Umsetzeinrichtung (80) geschaltet ist.

## Claims

1. Optical pulse reflectometer comprising
- at least one light source (30), more particularly a laser diode;
- at least one connection means for connecting at least one object under test (60) (fibre);
- at least one photodetector (70);
- an indication means (90);
- at least one optical switch (40) for the selective connection of the light source (30) to the associated object under test (60) and for the selective connection of the object under test (60) to the associated photodetector (70),
**characterized in that**
the light source is a light source operated in constant light mode, and **in that** there is provided a control means for controlling the optical switch (40) for generating light pulses of predetermined frequency and duration.

2. Optical pulse reflectometer according to claim 1,
**characterized in that** the optical switch (40) is a 2x2 directional coupler or an acousto-optical modulator.

3. Optical pulse reflectometer according to claim 2, **characterized in that** the unused connection (48) of the optical switch (40) is terminated with a light shielding and absorption means.

4. Optical pulse reflectometer according to any one of claims 1 to 3, **characterized in that** a launching fibre (50) of predetermined length is connected in front of each object under test (60).

5. Optical pulse reflectometer according to any one of claims 1 to 4, **characterized in that** a Boxcar averager and a logarithm conversion means (80) are connected between the photodetector (70) and the indication means (90).

## Revendications

1. Réflectomètre optique à impulsions comprenant
- au moins une source de lumière (30), notamment une diode laser
- au moins un raccordement pour connecter au moins un objet de mesure (60) (fibre),
- au moins un photodétecteur (70),
- un dispositif indicateur (90),
- au moins un coupleur optique commutable (40) pour relier d'une manière ciblée la source de lumière (30) avec l'objet de mesure correspondant (60) et l'objet de mesure (60) avec le photodétecteur correspondant (70),
**caractérisé en ce que**
la source de lumière est une source de lumière exploitée en lumière constante et il est prévu un dispositif de commande du coupleur optique commutable (40) pour émettre des impulsions de lumière d'une fréquence et d'une durée prédéfinies.

2. Réflectomètre optique à impulsions selon la revendication 1, **caractérisé en ce que** le coupleur optique (40) est un coupleur directif 2*2 ou un modulateur acousto-optique.

3. Réflectomètre optique à impulsions selon la revendication 2, **caractérisé en ce que** la ligne libre (48) du coupleur optique (40) est terminée par un absorbeur et écran de lumière.

4. Réflectomètre optique à impulsions selon l'une des revendications 1 à 3, **caractérisé en ce que** chaque objet de mesure est précédé d'une fibre d'amorce (50) d'une longueur prédéfmie.

5. Réflectomètre optique à impulsions selon l'une des revendications 1 à 4, **caractérisé en ce qu'**un générateur de moyenne boxcar et un convertisseur logarithmique (80) sont intercalés entre le photodétecteur (70) et le dispositif indicateur (90).
